# EUROPEAN PATENT APPLICATION

(11) **EP 0 717 546 A2**
(43) Date of publication of application: **19.06.1996**
(21) Application number: 95308720.2
(22) Date of filing: 01.12.1995
(51) Int. Cl.: H04M 3/56, H04L 12/18

(54) **A multimedia user interface for accessing a network-based multipoint meeting**

(30) Priority: 16.12.1994 US 358214
(71) Applicant: AT&T Corp., New York, NY 10013-2412 (US)
(72) Inventor: Altom, Mark W., Plainfield, New Jersey 07060 (US); Benimoff, Nicholas I., Howell, New Jersey 07731 (US); Kirby, Douglas J., Middletown, New Jersey 07748 (US); Mane, Amir M., Lincroft, New Jersey 07738 (US)
(74) Representative: Johnston, Kenneth Graham

(57) **Abstract**

A graphical multimedia user interface is disclosed that employs a real life meeting room metaphor that provides a user experience in which the users point of view is that of being physically brought into a real life meeting room. Specifically, the graphical multimedia user interface provides a display to the user that places him or her outside the meeting room prior to entry and a real life animation sequence (including audio components) that upon successful user authentication provides an intuitively natural perception of the user being physically transported through dynamically opening doors into the meeting room and, finally, above a conference table. To this end, the graphical multimedia user interface leads, i.e., prompts, the user through the necessary sequence of events in accessing a virtual meeting in an intuitively natural manner. The advantage of this graphical multimedia user interface is the full use of the real life meeting room metaphor and enhancing the ease of use thereof.

## Description

### Technical Field

This invention relates to telecommunications networks and, more particularly, to multimedia communications networks for providing flexible multimedia telephone service and the like involving voice, video and data.

### Background Of the Invention

The essential characteristics of face-to-face meetings can be simulated by multimedia telecommunications conferencing systems. Such conferencing systems permit separated meeting participants to communicate with one another in multiple media such as voice, video and data from their own work place without requiring that they all convene in the same place.

There are a number of known video conferencing systems presently available. However, such conferencing systems do not provide an intuitive and easy way for prospective participants to access a meeting. Therefore, a problem still exists in network based conferencing systems as to how to easily bring participants at different locations into an electronic meeting room environment.

### Summary of the Invention

The problems and limitations with prior network based conferencing systems are overcome by using a graphical multimedia user interface (multimedia communications application program) which employs a real life meeting room metaphor that provides a user experience in which the user's point of view is that of being physically brought into a real life meeting room. Specifically, the graphical multimedia user interface provides a display to the user that places him or her outside the meeting room prior to entry and a real life animation sequence (including audio components) that upon successful user authentication provides a intuitively natural perception of the user being physically transported through dynamically opening doors into the meeting room and, finally, above a conference table. To this end, the graphical multimedia user interface leads, i.e., prompts, the user through the necessary sequence of events in accessing a virtual meeting in an intuitively natural manner. The advantage of this graphical multimedia user interface is the full use of the real life meeting room metaphor and enhancing the ease of use thereof.

### Brief Description of Drawing

FIG. 1 is an example of a multimedia telecommunications system in which the invention may be employed;
FIG. 2 shows, in block diagram form, details of a work station which may be employed in practicing the invention;
FIG. 3 is a flow chart illustrating the steps of a user accessing the meeting service;
FIG. 4 is a graphical screen representation displaying the meeting service being provided;
FIG. 5 is a graphical screen representation illustrating the user outside the meeting room doors with an authentication window;
FIG. 6 is a flow chart illustrating steps in the user authentication process;
FIG. 7 is a graphical screen representation illustrating access to stored user profiles;
FIG. 8 is a graphical screen representation illustrating a form for entering a new user profile;
FIG. 9 is a graphical screen representation illustrating a completed new user profile;
FIG. 10 is a graphical screen representation illustrating a list of available meetings;
FIG. 11 is a flow chart illustrating the steps in selecting a meeting;
FIG. 12 is a graphical screen representation illustrating a form for establishing a new meeting;
FIGs. 13-15 are graphical screen representations of an animation sequence for entering the meeting room;
FIG. 16 is a graphical screen representation illustrating the user entering an on going meeting;
FIG. 17 is a flow chart illustrating the steps of a user being invited to a meeting;
FIG. 18 is a graphical screen representation illustrating an invitation into the meeting; and
FIG. 19 is a flow chart illustrating the steps taken by an invited participant to provide user authentication for entering the meeting.

### Detailed Description

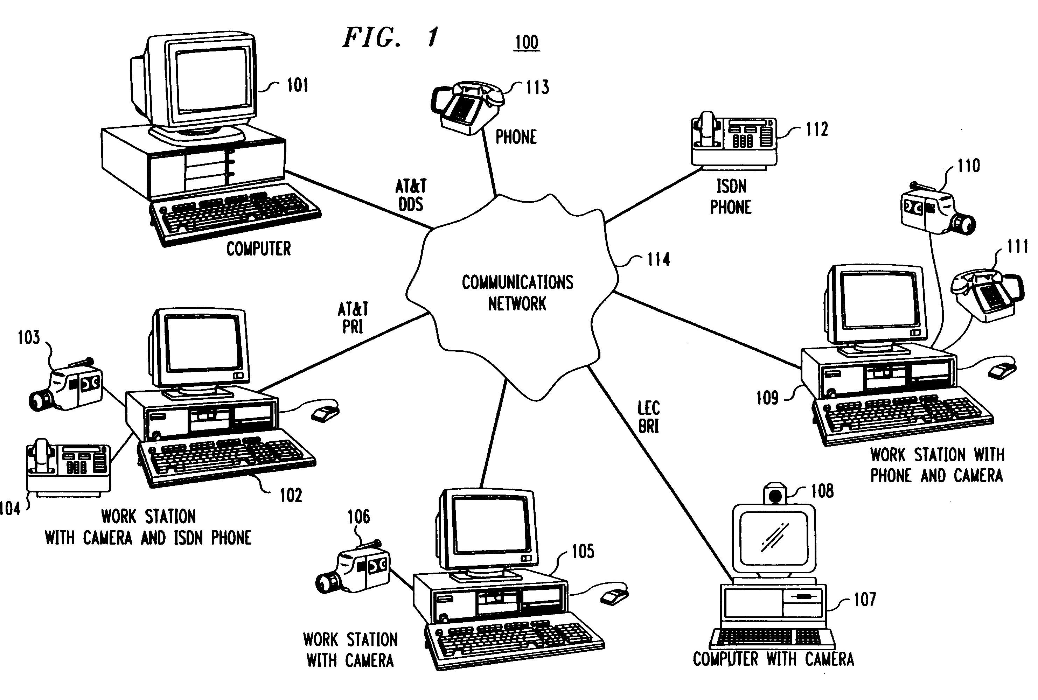

FIG. 1 shows an example of multimedia telecommunications system 100 in which an embodiment of the invention may be readily employed. Individual users at different work locations can access a network based meeting service via a number of different desktop communications devices. As shown, the desktop communications devices may include, but are not limited to, personal computer 101 with built in microphone for audio, workstation 102 including an attached video camera 103 and ISDN telephone 104, workstation 105 with attached video camera 106, personal computer 107 with an integrated video camera 108, workstation 109 including video camera 110 and an analog telephone 111, ISDN telephone 112, and, finally, analog telephone 113. It should be noted that personal computer 101 does not provide local user video to the meeting, while ISDN telephone 112 and analog telephone 113 only provide audio access to the meeting.

The personal computers and work stations may be any of those known in the art, for example, personal computers or workstations available from AT&T Corp., Apple Computer Inc., Sun Microsystems Inc. and others.

The several different desktop communications devices are interconnected via communications network 114. Note that workstations 101, 102, 105, 107 and 109, and ISDN telephone 112, and analog telephone 113 are directly connected to communications network 114. In this example, communications network 114 could be, for example, a long distance telecommunications network such as a long distance network provided by AT&T. It may be connected to a number of local telephone networks provided by local exchange carriers or alternate access vendors to provide access to the different desktop communications devices. Typically, communications network 114 may include the usual public switched long distance network composed of a plurality of well known digital switching units and may contain one or more packet networks. Additionally, communications network 114 may include known video conference bridge arrangements capable of conferencing video, audio and/or data bit streams among the different desktop communication devices. Communications network 114 may also include multimedia multipoint control units (MCUs) that provide multimedia call capability including video, audio and/or data bit streams. Such MCU units are known and are described in Bell Core Generic Requirements GR-1337-CORE, Issue 1, September 1993 and entitled "Multipoint Multimedia Conferencing Control Unit". Furthermore, communications network 114 may include an asynchronous transport mode (ATM) network capable of transporting and switching multimedia calls including video, audio. and/or data bit streams.

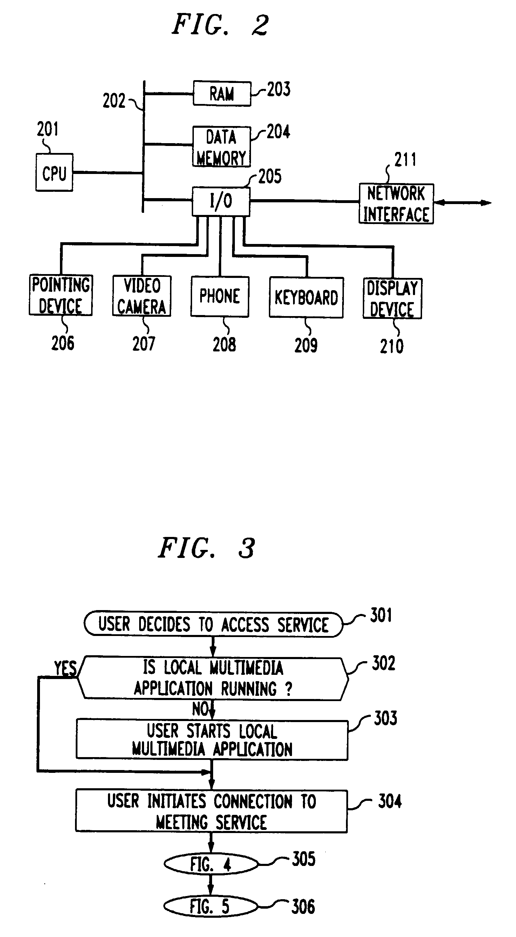

FIG. 2 shows, in simplified block diagram form details of a user's workstation. Specifically, shown is central processing unit (CPU) 201 which is interconnected via bus 202 to random access memory (RAM) 203, data memory 204, which may be a ROM, and input/output (I/O) unit 205. I/O 205 interfaces pointing device 206, video camera 207, if available, telephone 208, analog or ISDN if available, keyboard 209, and display device 210 to bus 202 and to network interface 211. Such workstations units are known in the art and commercially available, as indicated above, and provide shared data capabilities.

Interface network 211 comprises an application program interface that provides in known fashion an interface for the particular transmission protocol being employed by the workstation. These transmission protocols include but are not limited to digital data system (DDS), basic rate interface (BRI) ISDN, primary rate interface (PRI) ISDN, or the like. It is noted that a mouse, track ball, touch screen, keyboard cursor control keys or the like may be employed as a pointing device. Note that the graphical multimedia user interface, i.e., multimedia communications application program, of this invention can be implemented on top of a number of known personal computer systems. Examples of such systems programs are the Vistium* personal video system commercially available from AT&T Corp. and the ProShare* personal conferencing system 200 commercially available from Intel Corporation (* note that Vistium is a trademark of AT&T Corp. and that ProShare is a trademark of Intel Corporation). In this example, it is assumed that the personal video system or the personal conferencing system is included as part of the user workstation and provides the user interface 211.

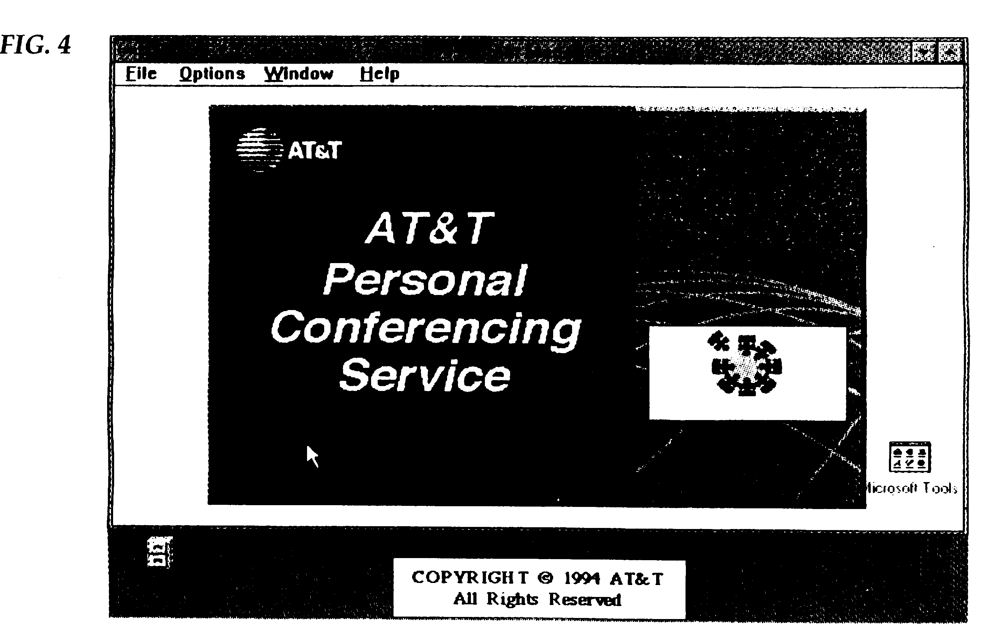

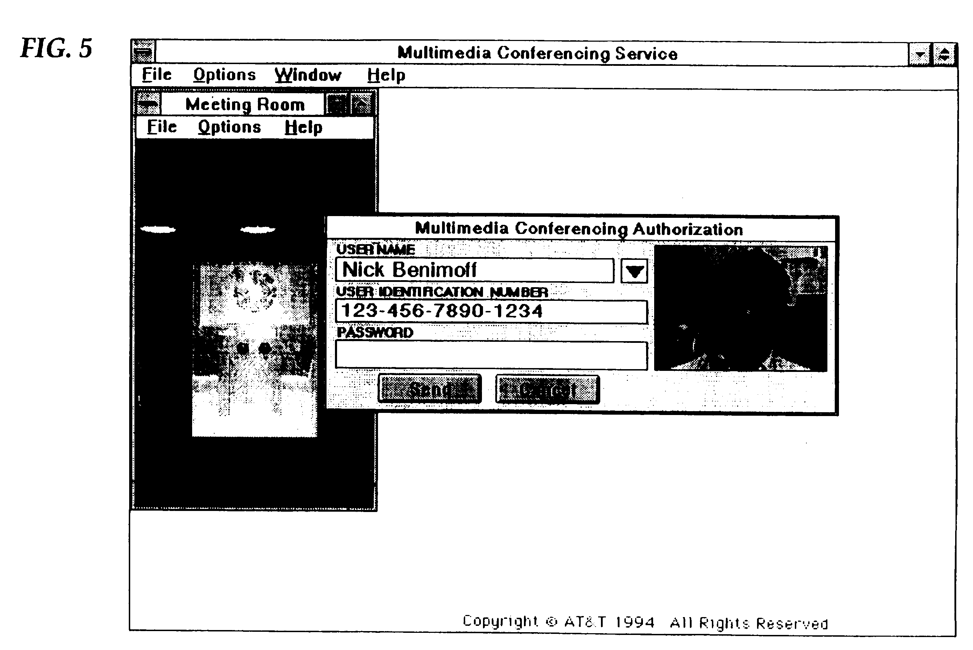

FIG. 3 is a flow chart illustrating the steps a user takes in initiating access to the meeting service. Thus, in step 301, the particular user decides to access the meeting service. Then, step 302 tests to determine whether or not the user's desktop communications device is currently running a multimedia communications application program. If the test result in step 302 is NO, the user via step 303 begins the multimedia communications application program. Thereafter, control is transferred to step 304. If the test result in step 302 is YES, control is also transferred to step 304 wherein the user initiates connection, i.e., access, to the meeting service. The user may initiate access to the meeting service by selecting an option from a computer menu or by starting a computer program for service access. Thereupon, a service identifying splash screen, as shown in FIG. 4, is displayed via step 305, provided that the user has display capability. Then, a display showing the photo-realistic outside doors of the meeting room being closed and a window including a user authentication screen, as shown in FIG. 5, is provided via step 306. In this example, the user authentication window includes a user image and fields for a user name, a user identification number, a meeting password and the like. It should be noted that a number of user profiles including names, images and user identification numbers and the like may be stored locally in the user work station. Further note that possible meetings available to a user include a new meeting to be established, ongoing meetings or meeting to which the user is invited to join.

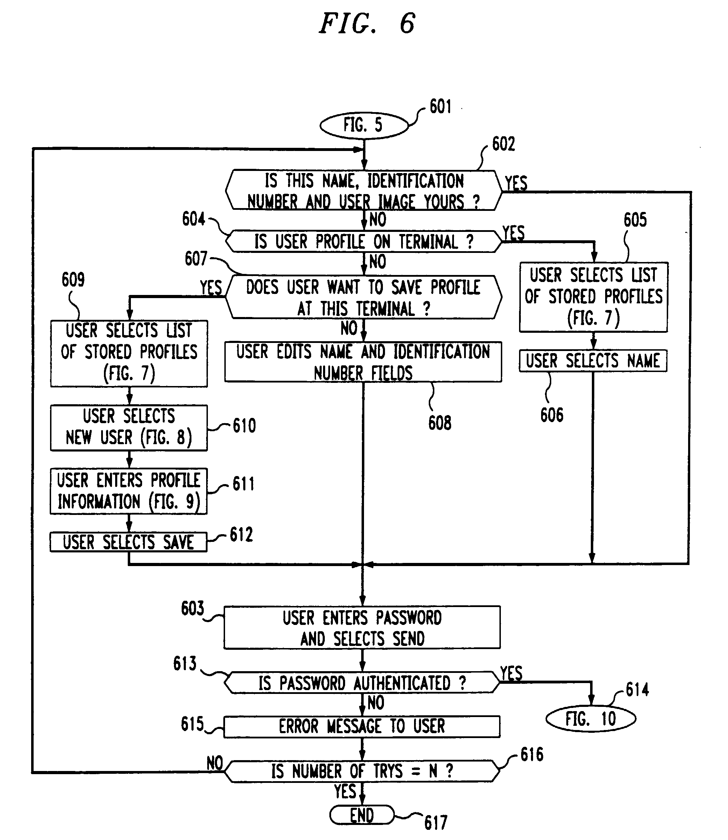

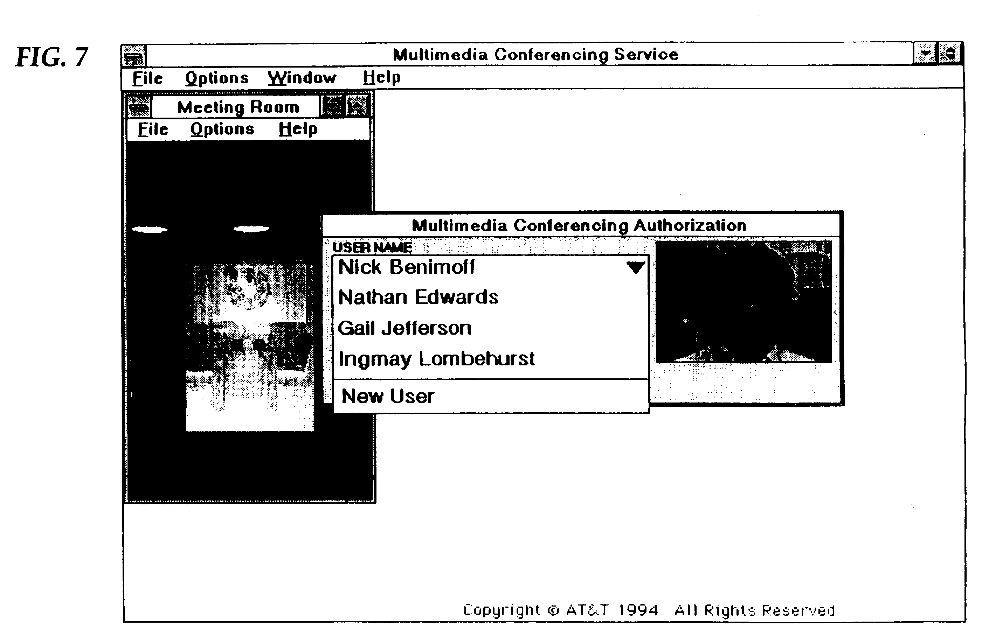

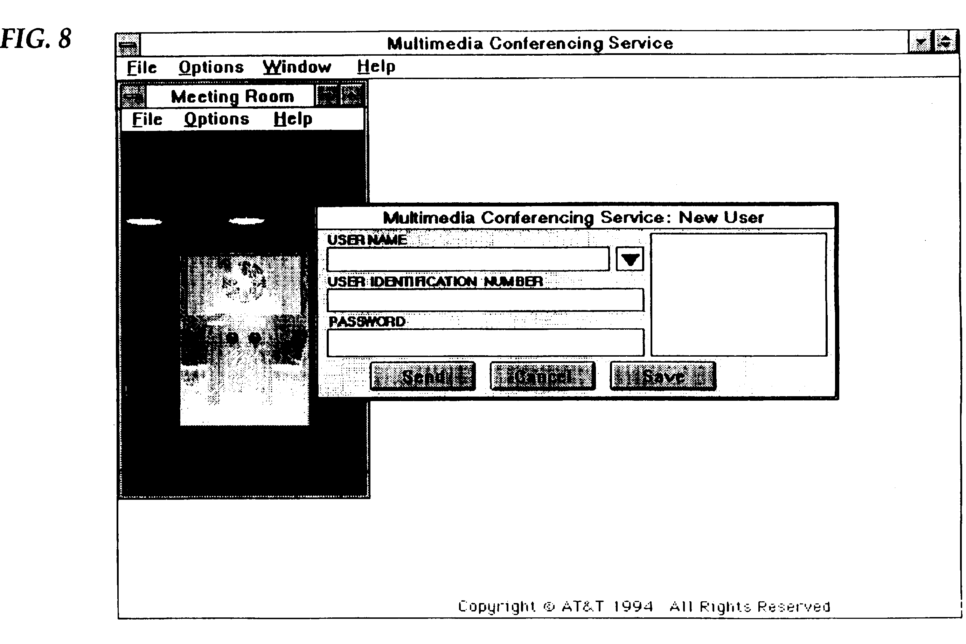

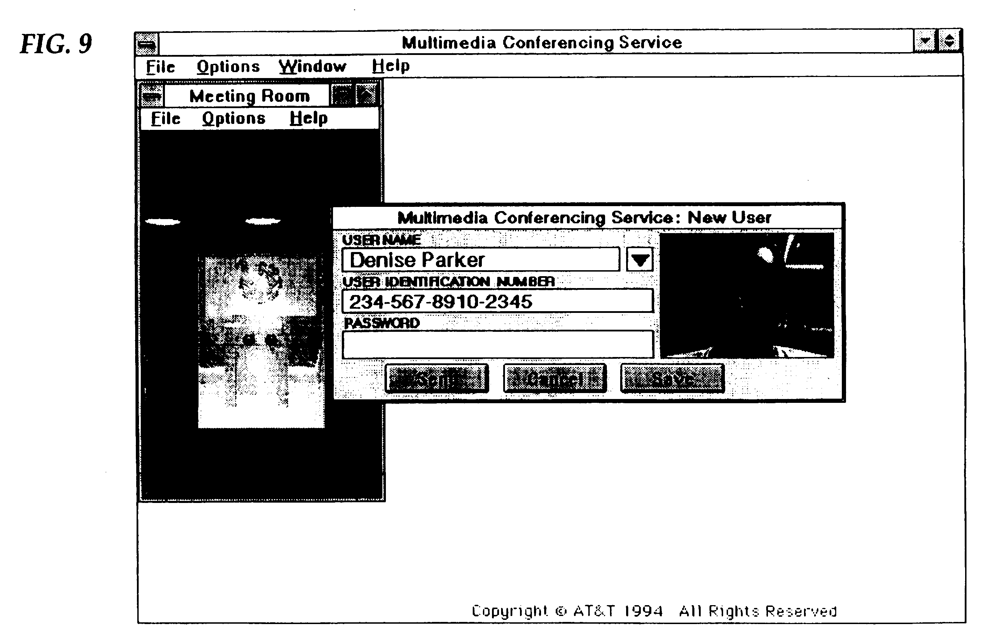

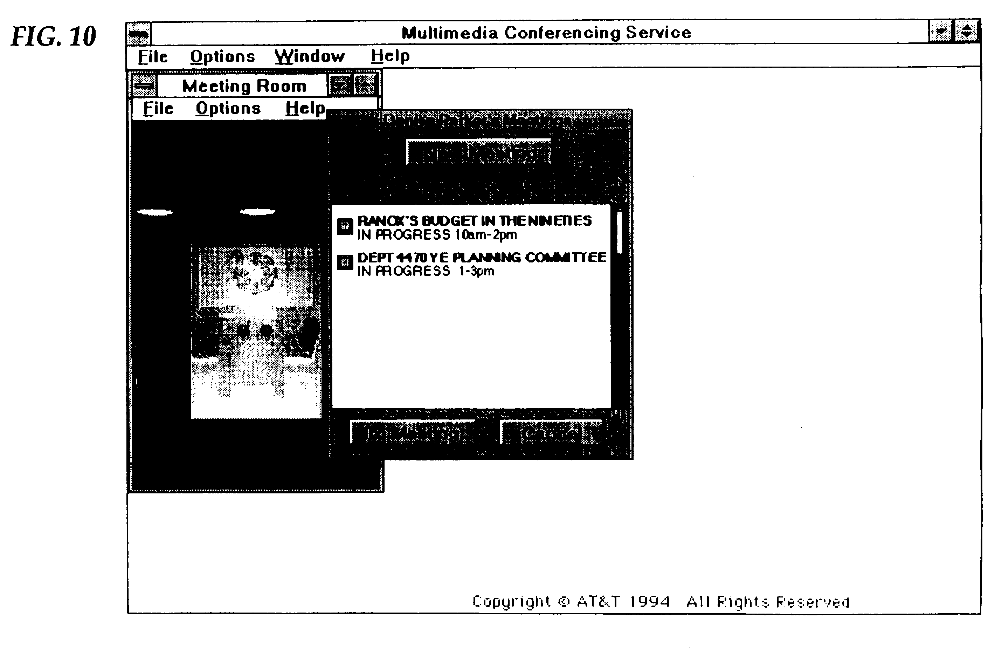

FIG. 6 is a flow chart illustrating steps taken in the user authentication process. The user authentication process is begun in step 601 from the screen shown in FIG. 5. A default user profile will initially be displayed in the authentication window, as shown in FIG. 5. Then, in step 602, the user determines whether or not the default profile displayed in the authentication window is correct. If the test result in step 602 is YES, control is transferred to step 603. If the test result in step 602 is NO, in step 604, the user determines whether or not a correct user profile is stored locally. If the test result in step 604 is YES, control is transferred to step 605 and the user selects a desired profile from a list of locally stored profiles, as shown in the screen of FIG. 7. Note that the screen shown in FIG. 7 displays a number of names and also a field for a new user name. Then, in step 606, the user selects a name from those displayed and control is transferred to step 603. If the test result in step 604 is NO, the user in step 607 determines whether or not to save the profile at the local terminal. If the test result in step 607 is NO, the user edits the profile fields to correct them via step 608 and control is transferred to step 603. If the test result in step 607 is YES, the user in step 609 selects the list of locally stored profiles, as shown in screen of FIG. 7 and control is transferred to step 610. In step 610, the user selects the new user option from the list and a form for entering a new user profile is displayed, as shown in FIG. 8. Then, in step 611, the user enters the new profile information, as shown in the screen of FIG. 9. Thereafter, the user saves this new profile information via step 612 and control is transferred to step 603. In step 603, the user enters his or her password and selects send. This causes the user password and identification number to be sent to the meeting service for authentication. If the user identification number and password are authenticated by the meeting service, the authentication window is removed and a real life like meeting room sign board is displayed, as shown in the screen of FIG. 10. If the user identification number and password fail to be authenticated in step 613, an error message is displayed in step 615 and in step 616 the user has the opportunity to enter a correct identification number and password. The user is provided up to N opportunities to enter a correct identification number and password, where N is a parameter that may be set by a system administrator of the network service. If the number of attempts to enter a correct identification number and password reaches the number N without the user being authenticated, the network service drops the connection to this particular user.

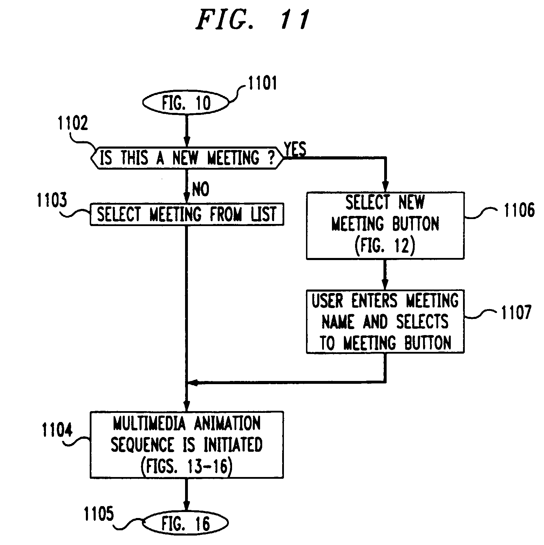

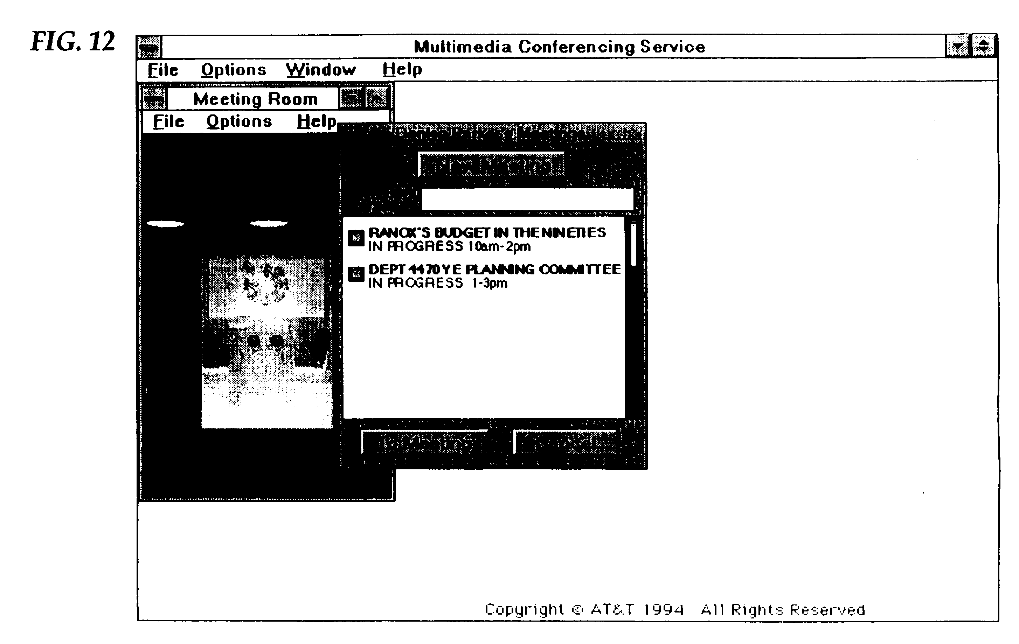

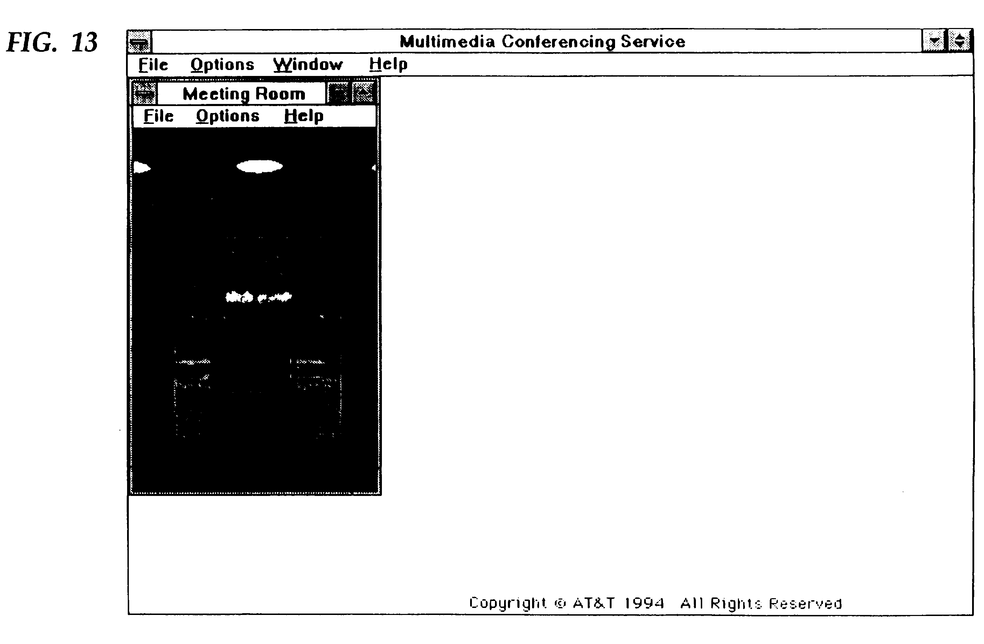

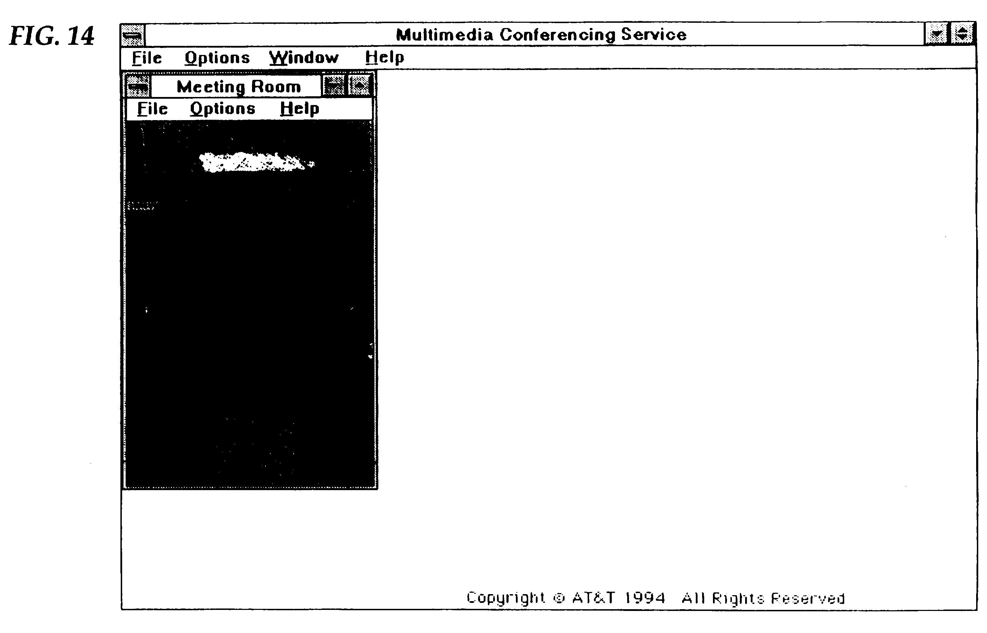

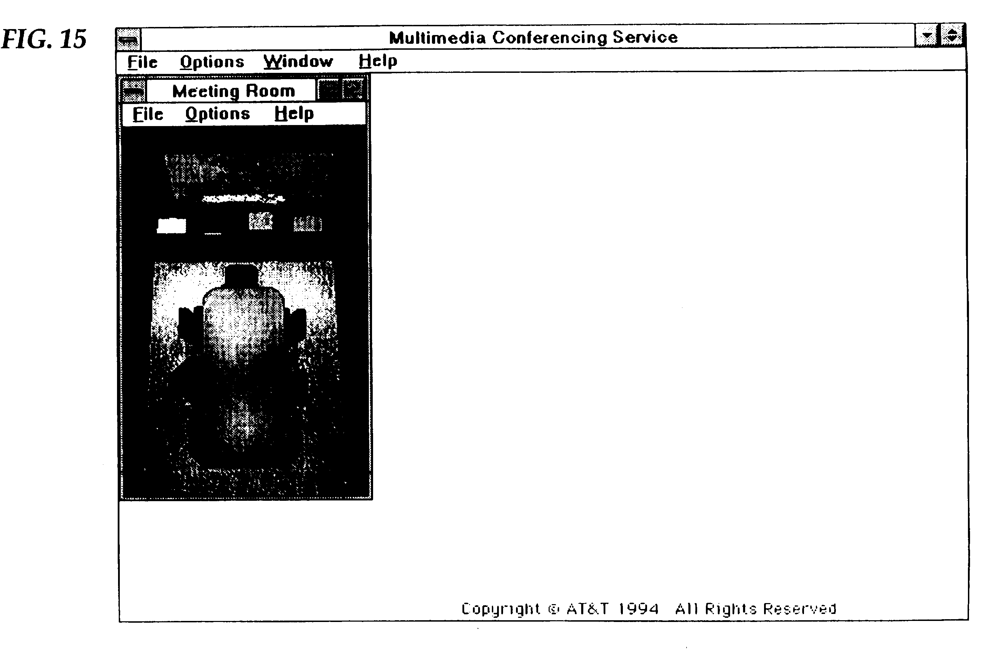

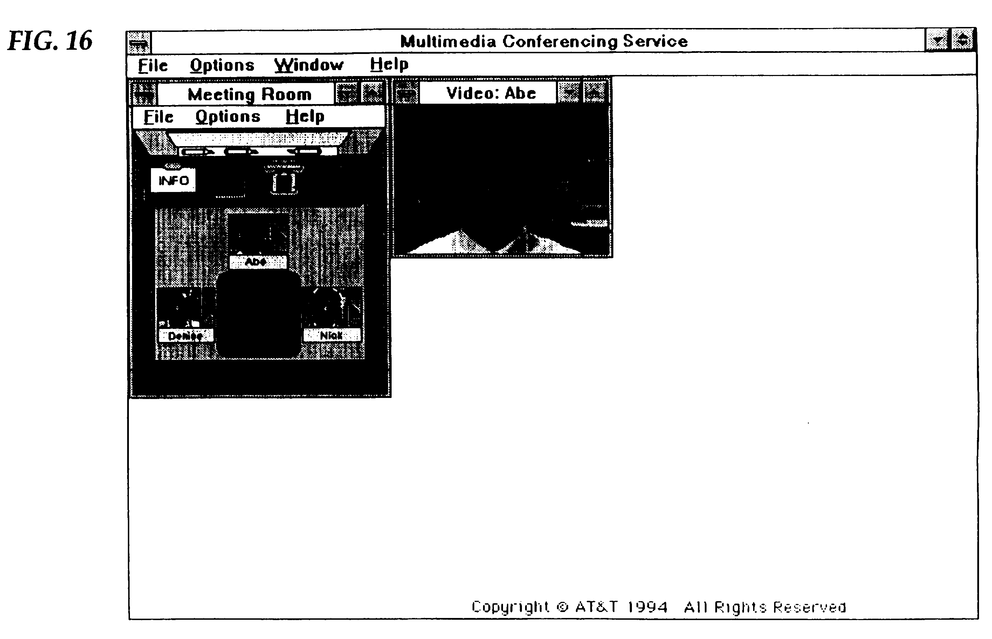

FIG. 11 is a flow chart illustrating the steps that a user takes in selecting a meeting. The meeting selection process begins in step 1101 from the meeting room sign board, shown in the screen of FIG. 10. Note that the sign board is positioned outside the closed photo-realistic meeting room doors. This arrangement enhances the perception of the user being outside a real life face-to-face meeting, providing the necessary preconditions for the user to enter the real life meeting room. It is noted that the meeting room sign board shown in the screen of FIG. 10 displays all previously scheduled meetings, as well as, a new meeting initiation option available to the user. Then, in step 1102 a test is made to determine if a new meeting is to be initiated. If the test result in step 1102 is NO, control is transferred to step 1103 and the user is enabled to select a meeting from the prescheduled list. Thereafter, step 1104 initiates and effects a multimedia real life animation sequence, as shown in the screens of FIGs. 13 through 16. Thus, as shown in the screen of FIG. 13, the photo-realistic meeting room doors open in a smooth and gradual manner until the meeting room is unveiled. Then, the user's viewpoint is smoothly and gradually transferred through the open doors into the meeting room in an intuitively natural manner, as shown in the screen of FIG. 14. Thereafter, the user's viewpoint is smoothly and gradually raised above the table to look down upon the entire meeting room, as shown on the screen of FIG. 15. The real life animation sequence ends with the screen shown in FIG. 16, which illustrates the overhead view of the meeting room including the participants, the meeting room table, and tools for multimedia conferencing. Shown, in the screen of FIG. 16, is an information (INFO) tool, which allows any of the meeting participants to obtain information about this particular meeting. Also shown is a phone book identified by a telephone on its cover which provides access to one or more multimedia directories. These multimedia directories include, but are not limited to, telephone numbers, facsimile numbers, network addresses, physical addresses and the like. The telephone symbol represents a telephone available for making calls during the meeting for participants. The share folder provides access to computer application programs that may be shared among the participants. These computer application programs include any standard commercially available word processor, spread sheet or data processing applications. Another tool available to the meeting participants is the white board with drawing pens shown on the wall at the back of the meeting room. Also shown in the screen of FIG. 16, is a video window of any particular one of the meeting participants entering the meeting room. Step 1105 ends the animation sequence as shown in the screen of FIG. 16. Returning to step 1102, if the test result is YES, a new meeting is to be selected and is effected in step 1106 by the user selecting the new meeting button, shown in the screen of FIG. 10, which causes the screen shown in FIG.12 to be displayed including a field for a new meeting name. Thereafter, in step 1107, the user enters the new meeting name and selects the meeting button, as shown in the screen of FIG.12. Then, control is transferred to step 1104 and the multimedia animation sequence is initiated, as described above. The animation sequence is ended by -step 1105 illustrating the screen shown in FIG.16. Note that all of the icons in the meeting room are of realistic real life objects that are or should be well known to the meeting participants. Since, all of the objects are well known as to their nature and use, the meeting participants do not need to know any sophisticated protocols in order to use them. Additionally, the image icons of the meeting participants are arranged around the table in similar fashion as the participants would be seated in a real life face-to-face meeting. This allows the participants to interact with each other and use the objects in the meeting room based on their already existing knowledge. This, in turn, enhances the ease of use of the graphical user interface of this invention.

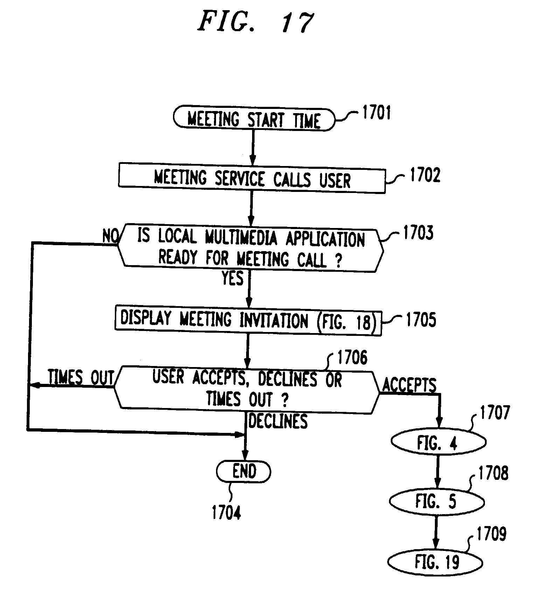

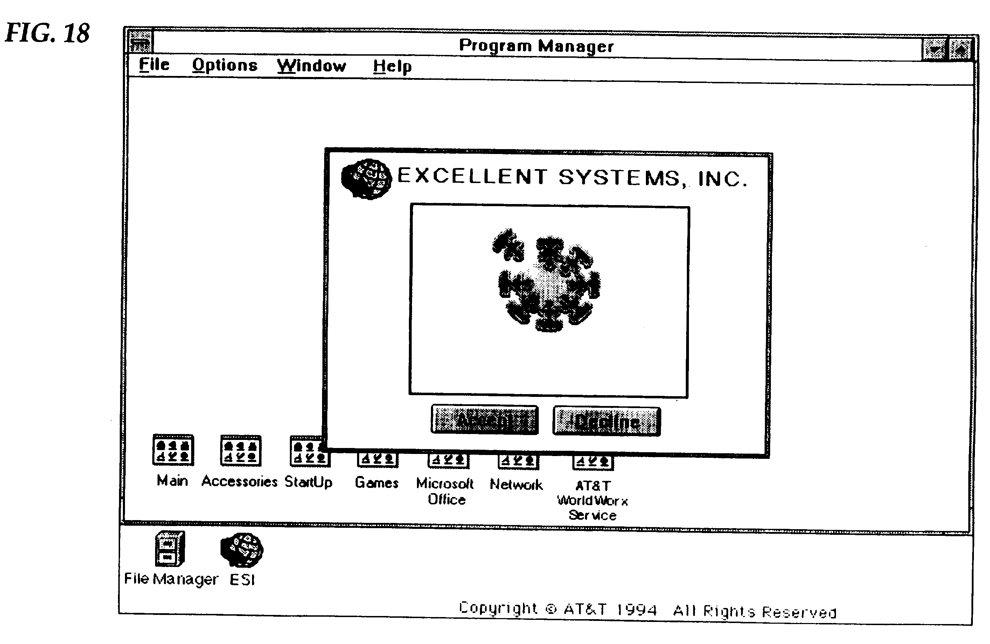

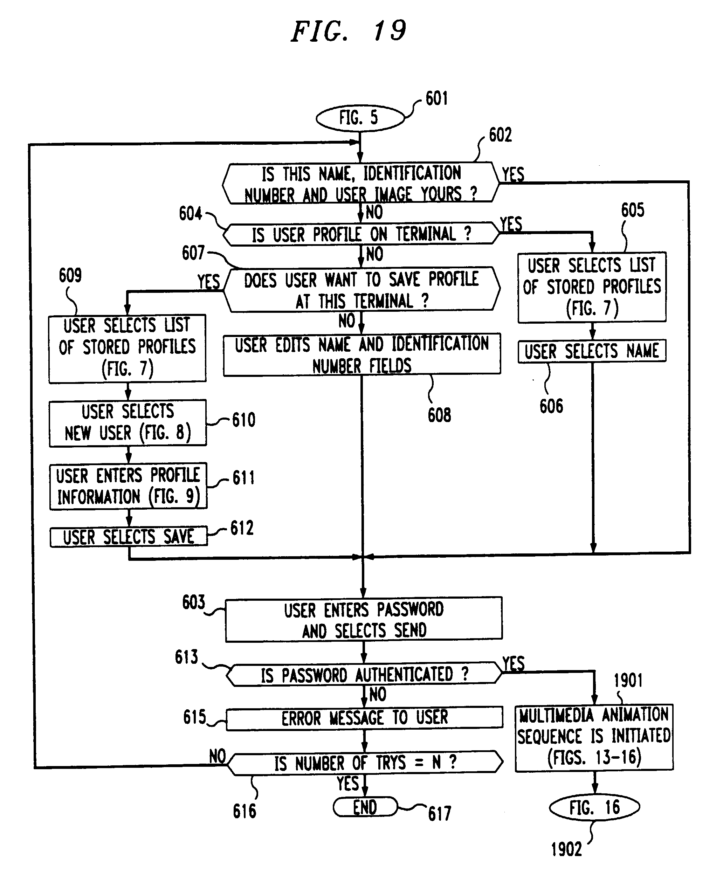

FIG. 17 is a flow chart illustrating the steps to be taken by a user who is being invited to an on-going meeting. It is noted that typically a meeting can be prescheduled through a reservation procedure to begin at a scheduled date and time and with a set of known participants who will then be called by the meeting service. Thus, the participants are provided the meeting start time via step 1701. At the appointed time, the meeting service calls each of the meeting participants via step 1702. Then, step 1703 tests to determine if the local multimedia communications application program at the individual participant's workplace is ready for the meeting call. If the test result in step 1703 is NO, the process is ended via step 1704. If the test result in step 1703 is YES, step 1705 displays the meeting invitation, as illustrated in the screen of FIG.18. As shown in the screen of FIG.18 buttons are available for the user to either accept or decline the meeting invitation. Thus, step 1706 tests to determine whether the user accepts or declines the meeting invitation or whether a predetermined time out interval has terminated. In the instances of the predetermined interval timing out and the user declining the meeting invitation, the process is ended via step 1704. If the test result in step 1706 is that the user accepts the meeting invitation, step 1707 causes the screen illustrating the particular meeting service being provided as shown in FIG. 4 to be displayed. Thereafter, the screen as shown in FIG.5is displayed illustrating the user outside the meeting room doors and including an authentication window. Thereafter, step 1709 passes control to the authentication process illustrated by the flow chart of FIG.19.

As indicated above, FIG.19 is a flow chart illustrating the steps taken by an invited participant to a meeting to provide user authentication for entering that meeting. The process illustrated in the flow chart of FIG. 19 in most part is identical to the process illustrated in the flow chart shown in FIG. 6 and described above. Consequently, those steps in the flow chart of FIG. 19 which are identical in function to those shown in FIG. 6 have been similarly numbered and will not again be described in detail. Thus, as shown steps 601 through 612 of FIG. 19 are identical to those steps in FIG. 6. The differences in the processes illustrated in FIG. 19 and FIG. 6 are that upon the authentication being successfully passed step 1901 initiates and effects the multimedia animation sequence shown in the screens of FIGs. 13 through 16 and as described above in relationship to step 1104 of FIG. 11 and that the animation sequence ends with the screen as shown in FIG. 16 illustrating the user entering the meeting room which was also described above.

## Claims

1. A method for use in a user workstation to provide a graphical user interface for graphically depicting entry into a virtual meeting room for a network based multimedia meeting service, comprising the steps of,
accessing a virtual meeting,
displaying on a screen at the user's workstation a graphical representation of a photo-realistic meeting room having photo-realistic closed doors and displaying on the screen an authentication window showing a prospective user's identification information,
authenticating the displayed user identification information, and
upon authentication of the user identification information, initiating a photo-realistic animation sequence to be displayed on the workstation screen in which the photo-realistic doors of the virtual meeting room are smoothly and gradually opened to display the photo-realistic virtual meeting room to the user.

2. The method as defined in claim 1 further including a step of upon authentication of the user identification information, displaying a graphical representation of a realistic meeting room sign board positioned outside the closed photo-realistic meeting room doors and including a list of any previously scheduled meetings and a new meeting initiation option.

3. The method as defined in claim 2 wherein the step of accessing a virtual meeting includes the step of selecting a meeting to access.

4. The method as defined in claim 3 wherein the step of selecting a meeting to access includes the steps of determining whether the meeting to be accessed is a new meeting, if it is a new meeting, selecting the new meeting initiation option, and if it is not a new meeting, selecting a meeting from any of the prescheduled meetings from the list displayed on the meeting sign board.

5. The method as defined in claim 1 wherein said step of accessing includes a step of inviting a prospective participant to a presently ongoing meeting.

6. The method as defined in claim 5 wherein the step of inviting includes the steps of a user calling the prospective participants being invited to the ongoing meeting and displaying a meeting invitation on the invited participant's workstation screen including an accept option and a decline option, if the invited prospective participant declines the invitation, ending the process and if the invited prospective participant accepts the invitation, displaying on the invited participant's workstation screen the photo-realistic meeting room having photo-realistic closed doors and displaying on the screen an authentication window showing a prospective user's identification information.

7. The method as defined in claim 1 wherein the animation sequence further includes the step of once the meeting room doors are opened displaying a photo-realistic representation of the meeting room in such a manner that there is a perception that the user is being transferred into the meeting room in a gradual intuitively natural manner.

8. The method as defined in claim 3 wherein the animation sequence further includes the step of upon the user being transferred into the meeting room displaying a photo-realistic representation of the meeting room in which the user is smoothly and gradually raised above the meeting room table looking down upon the entire meeting room.

9. The method as defined in claim 1 wherein the authentication window includes a send option and the step of authenticating the user information includes the steps of determining if the user identification information displayed in the authentication window is that of the user, if so, entering the user password and identification number and sending it to the network based multimedia meeting service for authentication, and if not, editing the user identification information displayed in the authentication window to be that of the prospective user and sending the edited user identification information to the network based multimedia meeting service for authentication.

10. The method as defined in claim 1 wherein the authentication window includes a send option and the step of authenticating the user information includes the steps of determining if the user identification information displayed in the authentication window is that of the user, if not, determining if the prospective user's identification information is stored on the workstation, if so, selecting a stored list of user identification information to be displayed, selecting the prospective user's identification information from the displayed list and sending the edited user identification information to the network based multimedia meeting service for authentication, and if not, editing the user identification information displayed in the authentication window to be that of the prospective user and sending the edited user identification information to the network based multimedia meeting service for authentication.

11. The method as defined in claim 1 wherein the authentication window includes a send option, a new user option and a save option and the step of authenticating the user information includes the steps of determining if the user identification information displayed in the authentication window is that of the user, if not, determining if the prospective user's identification information is stored on the workstation, if not, determining if the user wants to store his user identification information at this workstation, if not, editing the user identification information displayed in the authentication window to be that of the prospective user and sending the edited user identification information to the network based multimedia meeting service for authentication, and if so, selecting a stored list of user identification information to be displayed including a new user option, selecting the new user option, entering the new user identification information in the authentication window, said authentication window including a save option, selecting the save option from the authentication window and sending the new user identification information to the network based multimedia meeting service for authentication.

12. Apparatus for use in a user workstation to provide a graphical user interface for graphically depicting entry into a virtual meeting room for a network based multimedia meeting service, comprising,
means for accessing a virtual meeting,
means for displaying on a screen at the user's workstation a graphical representation of a photo-realistic meeting room having photo-realistic closed doors and for displaying on the screen an authentication window showing a prospective user's identification information,
means for authenticating the displayed user identification information, and
means responsive to the authentication of the user identification information for initiating a photo-realistic animation sequence to be displayed on the workstation screen in which the photo-realistic doors of the virtual meeting room are smoothly and gradually opened to display the photo-realistic virtual meeting room to the user.

13. The apparatus as defined in claim 12 further including means responsive to the authentication of the user identification information for displaying on said screen a graphical representation of a realistic meeting room sign board positioned outside the closed photo-realistic meeting room doors and including a list of any previously scheduled meetings and a new meeting initiation option.

14. The apparatus as defined in claim 13 wherein the means for accessing a virtual meeting includes means for selecting a meeting to access.

15. The apparatus as defined in claim 14 wherein the authentication window includes a new meeting option, and wherein the means for selecting a meeting to access includes means for determining whether the meeting to be accessed is a new meeting, if it is a new meeting, selecting the new meeting initiation option, and if it is not a new meeting, selecting a meeting from any of the prescheduled meetings from the list displayed on the meeting sign board.

16. The apparatus as defined in claim 12 wherein said means for accessing includes means for inviting a prospective participant to a presently ongoing meeting.

17. The apparatus as defined in claim 16 wherein the means for inviting includes means for a user to call a prospective participant being invited to the ongoing meeting and means for displaying on the invited participant's workstation screen a meeting invitation including an accept option and a decline option, if the invited prospective participant declines the invitation, ending the process and if the invited prospective participant accepts the invitation, displaying on the invited participant's workstation screen the photo-realistic meeting room having photo-realistic closed doors and displaying on the screen an authentication window showing a prospective user's identification information.

18. The apparatus as defined in claim 12 wherein the means for initiating the animation sequence further includes means upon the meeting room doors being opened for displaying a photo-realistic representation of the meeting room in such a manner that there is a perception that the user is being transferred into the meeting room in a gradual intuitively natural manner.

19. The apparatus as defined in claim 18 wherein the means for initiating the animation sequence further includes means upon the user being transferred into the meeting room for displaying a photo-realistic representation of the meeting room in which the user is smoothly and gradually raised above the meeting room table looking down upon the entire meeting room.

20. The apparatus as defined in claim 12 wherein the means for authenticating the user identification information includes means for determining if the user identification information displayed in the authentication window is that of the user, if so, for entering the user password and identification number and for sending it to the network based multimedia meeting service for authentication, and if not, for editing the user identification information displayed in the authentication window to be that of the prospective user and for sending the edited user identification information to the network based multimedia meeting service for authentication.

21. The apparatus as defined in claim 12 wherein the step of authenticating the user identification information includes means for determining if the user identification information displayed in the authentication window is that of the user, if not, for determining if the prospective user's identification information is stored on the workstation, if so, for selecting a stored list of user identification information to be displayed, for selecting the prospective user's identification information from the displayed list and for sending the edited user identification information to the network based multimedia meeting service for authentication, and if not, for editing the user identification information displayed in the authentication window to be that of the prospective user and for sending the edited user identification information to the network based multimedia meeting service for authentication.

22. The apparatus as defined in claim 12 wherein the means for authenticating the user identification information includes means for determining if the user identification information displayed in the authentication window is that of the user, if not, determining if the prospective user's identification information is stored on the workstation, if not, for determining if the user wants to store his user identification information at this workstation, if not, for editing the user identification information displayed in the authentication window to be that of the prospective user and for sending the edited user identification information to the network based multimedia meeting service for authentication, and if so, for selecting a stored list of user identification information to be displayed including a new user option, for selecting the new user option, for entering the new user identification information in the authentication window, said authentication window including a save option, for selecting the save option from the authentication window and for sending the new user identification information to the network based multimedia meeting service for authentication.
